# EUROPÄISCHE PATENTSCHRIFT

(11) **EP 4 108 065 B1**
(45) Veröffentlichungstag und Bekanntmachung des Hinweises auf die Patenterteilung: **22.01.2025**
(21) Anmeldenummer: 21181120.3
(22) Anmeldetag: 23.06.2021
(51) Int. Cl.: A01D 65/02

(54) **ÄHRENHEBER FÜR EIN MÄHWERK EINER ERNTEMASCHINE**
CROP LIFTER FOR A MOWER OF A HARVESTING MACHINE
RELEVEUR D'ÉPIS POUR UNE BARRE DE COUPE D'UNE MACHINE DE RÉCOLTE

(43) Veröffentlichungstag der Anmeldung: 28.12.2022
(73) Patentinhaber: SMF - Holding GmbH, 57612 Eichelhardt (DE)
(72) Erfinder: HÖLLER, Frank, 57629 Stein Wingert (DE)
(74) Vertreter: Neumann Müller Oberwalleney Patentanwälte PartG mbB

(56) Entgegenhaltungen:
- DE-A1- 4 323 053
- US-A- 1 202 084
- US-A- 1 818 335

## Beschreibung

Die Anmeldung betrifft einen Ährenheber für ein Mähwerk einer Erntemaschine mit Mähfingern, die an einem Mähbalken angebracht sind. Der Ährenheber weist eine Tragschiene mit einem ersten Ende zum Befestigen an dem Mähbalken, einen mit einem zweiten Ende der Tragschiene verbundenen Halmheber und einen Sperrhebel auf, wobei der Sperrhebel eine Stützfläche zum Abstützen an einem der Mähfinger aufweist und in mindestens zwei Positionen gegenüber der Tragschiene festlegbar ist, um einen Abstand zwischen dem Mähfinger und der Tragschiene einzustellen.

Bei derartigen Mähwerken sind entlang des Mähbalkens verteilt die Mähfinger angeordnet, welche einen Messerbalken führen und die Gegenschneide für die Schneiden der am hin- und hergehend bewegbaren Messerbalken angebrachten Mähklingen dienen. Um abgeknicktes oder lagerndes Halmgut sicher mähen zu können, werden Ährenheber eingesetzt. Je nach Art bzw. Beschaffenheit des Halmgutes und entsprechend gewünschter Schnitthöhe sind unterschiedliche Einstellungen des Mähwerks erforderlich. Dies hat zur Folge, dass sich auch die Ausrichtung des Ährenhebers zum Boden ändert. Um eine möglichst parallele Führung des Gleitbereiches des Ährenhebers zum Boden zu ermöglichen, wird der über die Mähfingerspitze vorstehende Bereich gegenüber dem Mähfinger angehoben oder abgesenkt.

Zu dem Zweck offenbart die EP 1 061 791 B1 einen Ährenheber, der eine Tragschiene, die mit dem Mähbalken verbindbar ist und einen Halmheber, der mit der Tragschiene verbunden ist, aufweist. Ein an der Tragschiene angebrachtes Halteelement aus zwei beabstandeten Schenkeln, zwischen die die Spitze eines Mähfingers einführbar ist, weist einen Sperrhebel, welcher um einen Schwenkzapfen schwenkbar zwischen den beiden Schenkeln gelagert ist, auf. Ein erster Hebelarm mit einer Stützfläche ist zur Abstützung mit einer Oberseite des Mähfingers in Kontakt bringbar und ein zweiter Hebelarm weist mindestens einer Rastfläche auf. Ein Sperrelement tritt mit der Rastfläche des Sperrhebels in Kontakt, um eine Verlagerung des Sperrhebels zu verhindern. Zur Überführung des Sperrhebels in die gewünschte Stellung kann durch Anheben des über die Mähfingerspitze vorstehenden Bereiches des Ährenhebers und durch Drücken auf den zweiten Arm des Sperrhebels, dieser in Kontakt mit dem Sperrelement gebracht werden. Zur Lösung muss der Sperrhebel unter Verwendung eines Werkzeugs außer Wirkverbindung mit dem Sperrelement gebracht werden.

Der Oberbegriff des Anspruchs 1 ist aus DE 43 23 053 A1 bekannt. Weitere Ährenheber sind z.B. aus US 1 818 335 und US 1 202 084 A bekannt. 1

Eine Aufgabe kann darin bestehen, einen Ährenheber vorzuschlagen, dessen Handhabung vereinfacht ist, beispielsweise indem eine Höheneinstellung und/oder eine Demontage ohne Werkzeug ermöglicht werden und/oder indem die Höheneinstellung und/oder die Demontage mit einer Hand erfolgen kann.

Die Aufgabe wird durch den Gegenstand des Anspruchs 1 gelöst. In den Unteransprüchen sind vorteilhafte Ausführungsformen angegeben.

Ein Ährenheber für ein Mähwerk einer Erntemaschine mit Mähfingern, die an einem Mähbalken angebracht sind, weist eine Tragschiene mit einem ersten Ende zum Befestigen an dem Mähbalken, einen mit einem zweiten Ende der Tragschiene verbundenen Halmheber und einen Sperrhebel auf. Der Sperrhebel weist eine Stützfläche zum Abstützen an einem der Mähfinger auf und ist in mindestens zwei Positionen gegenüber der Tragschiene festlegbar, um einen Abstand zwischen dem Mähfinger und der Tragschiene einzustellen. Gemäß eines Aspekts ist eine längliche Ausnehmung an dem Ährenheber vorgesehen und der Sperrhebel ist in der länglichen Ausnehmung verschiebbar geführt.

Um einen Abstand zwischen dem Mähfinger und der Tragschiene einzustellen, wird ein Abstand zwischen der Stützfläche und der Tragschiene festgelegt, wobei die mindestens zwei Positionen zwei unterschiedlichen Abständen zwischen der Stützfläche und der Tragschiene entsprechen. Ein Vorteil besteht darin, dass sowohl ein Festlegen des Sperrhebels in jeder der Positionen als auch ein Lösen daraus durch ein Verschieben des Sperrhebels entlang der länglichen Ausnehmung bewirkt wird, sodass vorteilhaft kein weiteres Bauteil betätigt werden muss, insbesondere nicht mit einem Werkzeug.

Um gegenüber der Tragschiene zwischen den mindestens zwei Positionen verlagerbar zu sein, kann der Sperrhebel beispielsweise schwenkbar gegenüber der Tragschiene in der länglichen Ausnehmung gehalten sein. Die längliche Ausnehmung kann dabei im Weitesten Sinne entlang der Tragschiene verlaufen, wobei der Verlauf nicht zwingend parallel zur Tragschiene sein muss. Die längliche Ausnehmung kann an einem beliebigen Bauteil, das mit der Tragschiene verbunden ist, ausgebildet sein, oder an der Tragschiene selbst. Die längliche Ausnehmung ist durchgehend ausgeführt. Sie erstreckt sich in einer Längsrichtung wesentlich weiter als in einer Richtung quer zur Längsrichtung, beispielsweise mindestens fünfmal so weit. Die längliche Ausnehmung kann auch als Langloch bezeichnet werden, wobei die Erstreckung quer zu der Längsrichtung nicht zwingend gleichbleibend sein muss.

Der Sperrhebel kann als Platte ausgeführt sein, was auch als plattenförmiges oder flaches Bauteil bezeichnet werden kann. Eine Platte zeichnet sich dadurch aus, dass sie in zwei der Raumrichtungen eine wesentlich größere Erstreckung aufweist, als in der dritten Raumrichtung, also beispielsweise eine mindestens fünfmal so große Erstreckung. Der Sperrhebel kann aus einem Flachmaterial, wie beispielsweise einem Blech, ausgestanzt oder ausgeschnitten sein. Eine Dicke des Sperrhebels ist an die längliche Ausnehmung derart angepasst, dass der Sperrhebel in der länglichen Ausnehmung angeordnet sein kann.

Erfindungsgemäß weist der Sperrhebel Rastausnehmungen auf, wobei je Position eine der Rastausnehmungen mit einem Rastabschnitt an einem Randbereich der länglichen Ausnehmung zusammenwirkt, um den Sperrhebel in der jeweiligen Position festzulegen. Die Rastausnehmungen können stufenartig angeordnet sein. Gemäß einer Ausführungsform sind die Rastausnehmungen nutförmig ausgebildet, um den Rastabschnitt auf mehreren Seiten umfassen zu können.

Gemäß einer weiteren Ausführungsform ist vorgesehen, dass der Rastabschnitt mit einer mit dem Sperrhebel zusammenwirkenden Oberfläche des Mähfingers einen spitzen Winkel einschließt. Die Tragschiene ist an dem ersten Ende an dem Mähbalken befestigt und wird zur Einstellung der Höhe ausgelenkt. Eine durch die Auslenkung entstehende Spannung der Tragschiene zwischen dem ersten Ende und einer Abstützung auf der Oberfläche des Mähfingers über die Stützfläche des Sperrhebels erzeugt eine im Wesentlichen in Richtung des Mähfingers, also in Einbaulage zum Boden gerichtete, Federkraft der Tragschiene. Diese Federkraft wird über den Rastabschnitt auf die Rastausnehmung übertragen. Dementsprechend wirkt ein von dem Winkelmaß des spitzen Winkels abhängiger Anteil der Federkraft in die Rastausnehmung hinein. So wird der Rastabschnitt durch den Anteil der Federkraft in der Rastausnehmung gehalten, die sich vorteilhafterweise in einem dem spitzen Winkel entsprechenden Winkel erstrecken kann. Ein Lösen des Sperrhebels wird so vorteilhaft vermieden. Der spitze Winkel kann beispielsweise zu dem ersten Ende der Tragschiene hin geöffnet sein. Um den spitzen Winkel zwischen dem Rastabschnitt und dem Messerrücken zu gewährleisten, kann die längliche Ausnehmung in Richtung ihrer Längserstreckung einen Knick aufweisen, oder insbesondere einen S-förmigen oder Z-förmigen Verlauf aufweisen.

Gemäß einer weiteren Ausführungsform ist vorgesehen, dass der Sperrhebel schwenkbar in der länglichen Ausnehmung angeordnet ist, wobei eine sich ergebende Schwenkachse quer zu der Längserstreckung der länglichen Ausnehmung verläuft und in Richtung der Längserstreckung der länglichen Ausnehmung verlagerbar ist. Als Schwenkachse im Sinne der Anmeldung ist gedachte Rotationsachse des Sperrhebels zu verstehen, welche keine körperlichen Merkmale im Sinne einer Welle, Achse oder Aufhängung aufweisen muss. Ein Schwenkbereich des Sperrhebels kann beschränkt sein, sofern die Verstellung in die verschiedenen Positionen möglich ist. Ein Schwenkbereich von höchstens 45° Winkelmaß kann vorgesehen sein.

Gemäß einer weiteren Ausführungsform ist vorgesehen, dass der Sperrhebel in der länglichen Ausnehmung nebeneinander angeordnet einen Verbindungsabschnitt und einen Stützabschnitt aufweist, wobei der Sperrhebel an dem Verbindungsabschnitt schwenkbar um die Schwenkachse in der länglichen Ausnehmung gehalten ist. Der Verbindungsabschnitt und der Stützabschnitt sind also in Richtung der Längserstreckung der länglichen Ausnehmung nebeneinander angeordnet. Der Verbindungsabschnitt und der Stützabschnitt sind dabei zumindest teilweise innerhalb der länglichen Ausnehmung angeordnet und ragen beispielsweise aus dieser heraus. Die Schwenkachse verläuft durch den Verbindungsabschnitt, zu dem sie weitgehend ortsfest verläuft. Dies ist hinsichtlich der Ausrichtung zu der länglichen Ausnehmung nicht notwendigerweise der Fall, da der Sperrhebel mit Spiel in der länglichen Ausnehmung gehalten sein kann. Der Stützabschnitt kann dem ersten Ende der Tragschiene zugewandt sein und der Verbindungsabschnitt kann dem zweiten Ende der Tragschiene zugewandt sein. Die Stützfläche und die Rastausnehmungen können an dem Stützabschnitt ausgebildet sein, wobei die Rastausnehmungen in verschiedenen Abständen zu der Stützfläche angeordnet sind. Durch ein Schwenken des Sperrhebels werden so vorteilhaft Abstände der Rastausnehmungen zu der länglichen Ausnehmung und mithin zu der Tragschiene verändert.

Der Sperrhebel kann eine Ausnehmung zwischen dem Verbindungsabschnitt und dem Stützabschnitt aufweisen, wobei der Verbindungsabschnitt über einen ersten Schenkel mit dem Stützabschnitt verbunden ist. Der Stützabschnitt kann einen zweiten Schenkel aufweisen, der gegenüber dem ersten Schenkel abgewinkelt ist und die Rastausnehmungen aufweist. Der erste Schenkel und der zweite Schenkel können beispielsweise einen Winkel von etwa 90° einschließen. Die Stützfläche ist beispielsweise an einer dem Mähfinger zugewandten Seite des Stützabschnitts angeordnet und der zweite Schenkel auf einer von der Stützfläche abgewandten Seite des Stützabschnitts. Somit verändert sich mit dem Schwenken des Sperrhebels vorteilhaft auch der Abstand der Stützfläche zu der länglichen Ausnehmung und mithin zu der Tragschiene.

Gemäß einer weiteren Ausführungsform ist vorgesehen, dass der den Rastabschnitt bildende Randbereich der länglichen Ausnehmung an einem dem ersten Ende der Tragschiene zugewandten hinteren Ende der länglichen Ausnehmung angeordnet ist. Die Bezeichnung als hinteres Ende stellt eine reine Definition dar, die dem in einer Fahrtrichtung der Erntemaschine hinteren Ende im eingebauten Zustand entspricht. Der Sperrhebel kann durch eine Spannfeder in Richtung des Rastabschnitts vorgespannt sein.

Zur Festlegung des Sperrhebels in der länglichen Ausnehmung können verschiedene Ausführungsformen in Betracht kommen, die gewährleisten, dass eine Montage des Sperrhebels möglich ist und dass ein Verlieren des Sperrhebels im Betrieb nach Möglichkeit vermieden wird.

Eine mögliche Ausführungsform besteht darin, dass der Sperrhebel eine Verbindungsausnehmung aufweist, wobei die Verbindungsausnehmung dazu vorgesehen ist, einen Verbindungsrandbereich der länglichen Ausnehmung aufzunehmen. Der Verbindungsrandbereich der länglichen Ausnehmung ist an einem dem Rastabschnitt gegenüberliegenden Ende der länglichen Ausnehmung angeordnet, also beispielsweise dem zweiten Ende der Tragschiene zugewandt, und kann auch als vorderes Ende der länglichen Ausnehmung bezeichnet werden. Die Verbindungsausnehmung ist in dem Verbindungsbereich des Sperrhebels ausgebildet und von Stegen begrenzt, deren Enden den Verbindungsrandbereich zwischen sich aufnehmen. Zwischen den Enden ist eine Öffnung gebildet, die zumindest so weit ist, dass der Verbindungsrandbereich darin aufgenommen werden kann. Hinter der Öffnung weitet sich die Verbindungsausnehmung auf, um das Schwenken des Sperrhebels um den Verbindungsbereich zu ermöglichen. Ein Abstand zwischen dem vorderen Ende und dem hinteren Ende der länglichen Ausnehmung ist dabei geringer als eine Erstreckung des Sperrhebels in der Längserstreckungsrichtung der länglichen Ausnehmung. Die Verbindungsausnehmung erstreckt sich tiefer in Richtung der Rastausnehmungen in den Sperrhebel hinein als die Rastausnehmungen. Um den Sperrhebel in die längliche Ausnehmung einsetzen zu können, ist ein kleinster Abstand von der Verbindungsausnehmung bis zu einem dem ersten Ende der Tragschiene zugewandten Rand des Sperrhebels geringer als der Abstand zwischen dem vorderen Ende und dem hinteren Ende der länglichen Ausnehmung. Durch eine Vorspannung des Sperrhebels gegen den Rastbereich wird dieser in der länglichen Ausnehmung gehalten. Die Spannfeder zur Erzeugung der Vorspannung kann auf eines der Enden der Stege der Verbindungsausnehmung wirken. Denkbar wäre auch, die Spannfeder in der Verbindungsausnehmung zwischen dem vorderen Ende der länglichen Ausnehmung und dem Sperrhebel anzuordnen.

Eine weitere mögliche Ausführungsform besteht darin, dass der plattenförmige Sperrhebel zwei Zapfen aufweist, die von mindestens einer der zwei Oberflächen des Sperrhebels im Verbindungsabschnitt hervorstehen, also in Richtung der geringsten Erstreckung des Sperrhebels. Die Zapfen können auch beiderseits des Sperrhebels hervorstehen. Indem einer der Zapfen einerseits des Bauteils mit der länglichen Ausnehmung angeordnet ist und ein anderer der Zapfen auf der gegenüberliegenden Seite, ist der Sperrhebel vorteilhaft schwenkbar und verschiebbar in der länglichen Ausnehmung gehalten. Ein Abstand zwischen dem vorderen Ende und dem hinteren Ende der länglichen Ausnehmung ist dabei größer als eine Erstreckung des Sperrhebels in der Längserstreckungsrichtung der länglichen Ausnehmung. Mindestens einer der Zapfen kann als Stift ausgebildet sein, der in einer Bohrungen in dem Sperrhebel einsitzt. Der Stift kann in der Bohrung eingesetzt werden, nachdem der Sperrhebel in die längliche Ausnehmung eingesetzt wurde, um vorteilhaft dessen Montage zu gewährleisten. Der Stift kann in die Bohrung beispielsweise eingeschraubt, eingepresst, oder darin verlötet oder verschweißt sein. Mindestens einer der Zapfen kann einteilig mit dem Sperrhebel ausgebildet sein. Dieser kann durch einen Umformprozess oder einen Urformprozess hergestellt sein, beispielsweise durch Napfziehen oder Abwinkeln einer Ausklinkung. Die Zapfen müssen keine zylindrische Form aufweisen.

Gemäß einer weiteren möglichen Ausführungsform ist vorgesehen, dass die längliche Ausnehmung eine sich quer zu einer Längserstreckung der Ausnehmung erstreckende Ausformung aufweist. Diese erlaubt das Einsetzen des Sperrhebels mit zwei Zapfen in die längliche Ausnehmung. Dadurch wird ermöglicht, beide Zapfen einteilig mit dem Sperrhebel auszubilden. Durch die Vorspannung des Sperrhebels gegen den Rastbereich wird der Sperrhebel in der länglichen Ausnehmung gehalten. Die Spannfeder zur Erzeugung der Vorspannung kann auf eine Rand des Verbindungsabschnitts wirken und kann sich durch die längliche Ausnehmung hindurch erstrecken.

Gemäß einer weiteren Ausführungsform ist vorgesehen, dass der Sperrhebel einen Betätigungsabschnitt zur manuellen Betätigung aufweist, wobei an dem Betätigungsabschnitt eine konkave Form zur Aufnahme eines Fingers einer Bedieners ausgebildet ist. Die konkave Form ist dabei vorteilhaft ergonomisch geformt, um eine leichte und bequeme Betätigung mit dem Finger zu gewährleisten und öffnet sich beispielsweise in Richtung zu dem ersten Ende der Tragschiene. Die Einstellung des Ährenhebers in den verschiedenen Positionen ist vorteilhaft ohne Werkzeug durch Handbetätigung möglich, grundsätzlich auch mit nur einer Hand, indem die Tragschiene mit der Hand ziehend nach oben ausgelenkt wird und der Betätigungsabschnitt beispielsweise gleichzeitig mit dem Daumen betätigt wird, um eine der Rastausnehmung an dem Rastabschnitt einzurasten oder diese zu lösen. Der Betätigungsabschnitt ist, anders als der Verbindungsabschnitt und der Stützabschnitt, außerhalb der länglichen Ausnehmung, auf einer von dem Mähfinger abgewandten Seite der Tragschiene angeordnet. Der Betätigungsabschnitt ist beispielsweise auf einer von der Stützfläche abgewandten Seite der Rastausnehmungen mit dem Stützabschnitt verbunden. Der Betätigungsabschnitt ist so im eingebauten Zustand zur bequemen Betätigung durch den Bediener oberhalb des Stützabschnitts und damit oberhalb der länglichen Ausnehmung angeordnet. Wenn der Sperrhebel eine Ausnehmung zwischen dem Verbindungsabschnitt und dem Stützabschnitt aufweist, kann der Betätigungsabschnitt mit dem zweiten Schenkel und über einen dritten Schenkel mit dem Verbindungsabschnitt verbunden, wodurch sich eine vorteilhaft stabile, geschlossene Ringform ergibt.

Gemäß einer weiteren Ausführungsform kann der Sperrhebel einen Betätigungshaken zur Betätigung durch den Mähfinger aufweisen, der dazu ausgebildet ist, eine Spitze des Mähfingers derart zu umfassen, dass der Sperrhebel bei einem Verändern eines Abstands zwischen dem Mähfinger und der Tragschiene an dem Mähfinger gehalten wird und so selbsttätig in eine der Positionen verstellt wird. Bei einem Auslenken der Tragschiene wird der Abstand zu der Oberfläche des Mähfingers vergrößert. Durch den unter die Spitze des Mähfingers greifenden Betätigungshaken wird der Sperrhebel dabei verschwenkt. Aufgrund der Form des Betätigungshakens und der Verschiebbarkeit des Sperrhebels entlang der länglichen Ausnehmung rutschte der Betätigungshaken bei fortgesetzter Auslenkung der Tragschiene von der Mähfingerspitze ab. Der Sperrhebel wurde zuvor soweit verschwenkt, dass eine der Rastausnehmungen den Rastbereich erreicht und durch die Vorspannung des Sperrhebels gegen den Rastbereich rastet dieser vorteilhaft selbsttätig ein.

Gemäß einer weiteren Ausführungsform ist vorgesehen, dass die längliche Ausnehmung in der Tragschiene angeordnet ist, beispielsweise in einer Haupterstreckungsrichtung der Tragschiene verlaufend. Die sich ergebende Schwenkachse des Sperrhebels ist somit in der Tragschiene angeordnet und entlang derselben verstellbar. Die Stützfläche kann dazu vorgesehen sein, mit einer der Tragschiene zugewandten Seite des Mähfingers in Kontakt zu sein.

Die Haupterstreckungsrichtung der Tragschiene entspricht in kartesischen Koordinaten einer Raumrichtung X, welche der Fahrtrichtung der Erntemaschine entspricht, wenn der Ährenheber montiert ist. Die Tragschien verläuft nicht geradlinig in X-Richtung, sondern weist mehrere Biegungen in einer Z-Richtung auf, welche einer Vertikalen oder Schwerkraftrichtung entspricht, wenn der Ährenheber montiert ist. Die Tragschiene ist flach, mit in Y-Richtung größeren Ausdehnung als in Z-Richtung. Eine Auslenkung der an dem ersten Ende eingespannten Tragschiene in der Z-Richtung erzeugt daher eine entgegen der Auslenkung wirkende Federkraft. Der Sperrhebel kann gemäß einer Ausführungsform bezüglich einer Biegebeanspruchung der Tragschiene in einem Bereich der länglichen Ausnehmung versteifend wirken, wobei eine versteifende Wirkung des Sperrhebels in der ersten Biegerichtung (Z) größer ist, als in einer zweiten, der ersten Biegerichtung entgegengesetzten Biegerichtung (-Z). Wenn der Ährenheber montiert ist, wird der Auslenkung der Tragschiene in Schwerkraftrichtung also stärker entgegengewirkt, als entgegen der Schwerkraftrichtung. Dadurch wird vorteilhaft erreicht, dass der Ährenheber weniger leicht durch eine Auslenkung Richtung Erdboden, beispielsweise durch einen Stein, in den Erdboden eindringt, was zu einer plastischen Verformung und Zerstörung des Ährenhebers führen kann.

An der Tragschiene kann eine Aufnahme für den Mähfinger angeordnet sein. Eine weitere Ausführungsform kann dann darin bestehen, dass die längliche Ausnehmung in der Aufnahme angeordnet ist. Die Ausführungsform ist sinnvoll bei Ährenhebern, die unterhalb der Mähfinger am Mähbalken befestigt sind und bei denen die Aufnahme folglich auf einer dem Mähfinger zugewandten Oberseite angeordnet ist.

Ein weiterer Aspekt der Anmeldung betrifft einen Ährenheber für ein Mähwerk einer Erntemaschine mit Mähfingern, die an einem Mähbalken angebracht sind, wobei der Ährenheber eine Tragschiene mit einem ersten Ende zum Befestigen an dem Mähbalken, einen mit einem zweiten Ende der Tragschiene verbundenen Halmheber und einen Sperrhebel aufweist, wobei der Sperrhebel eine Stützfläche zum Abstützen an einem der Mähfinger aufweist und in mindestens zwei Positionen gegenüber der Tragschiene festlegbar ist, um einen Abstand zwischen dem Mähfinger und der Tragschiene einzustellen, der sich dadurch auszeichnet, dass die Stützfläche dazu vorgesehen ist, mit einer der Tragschiene zugewandten Seite des Mähfingers in Kontakt zu sein. Besonders vorteilhaft lässt sich die Tragschiene des Ährenhebers mit dem ersten Ende oberhalb des Mähfingers an dem Mähbalken befestigen. Eine längliche Ausnehmung kann in der Tragschiene des Ährenhebers vorgesehen sein, wobei der Sperrhebel in der länglichen Ausnehmung verschiebbar geführt ist.

Ein weiterer Aspekt der Anmeldung betrifft eine Mähanordnung mit einem Mähfinger und mit einem Ährenheber gemäß einem der zuvor beschriebenen Aspekte oder deren Ausführungsformen entspricht.

Ein weiterer Aspekt der Anmeldung betrifft ein Mähwerk für eine Erntemaschine, mit einem Mähbalken, an dem Mähfinger angebracht sind, wobei ein Ährenheber an dem Mähbalken befestigt ist und der Ährenheber einem der zuvor beschriebenen Aspekte oder deren Ausführungsformen entspricht.

Nachfolgend werden weitere Merkmale und Vorteile anhand von Ausführungsformen verschiedener Aspekte mit Bezug auf die beiliegenden Zeichnungen näher erläutert. Es zeigt:
Figur 1 eine Ausführungsform eines Ährenhebers in einer Seitenansicht;
Figur 2 eine weitere Ausführungsform des Ährenhebers in einer Seitenansicht;
Figur 3 eine Ausführungsform eines Mähwerks mit dem Ährenheber gemäß Figur 2 in einer Seitenansicht;
Figur 4 eine weitere Ausführungsform des Mähwerks mit dem Ährenheber gemäß Figur 1 in einer Seitenansicht;
Figur 5 ein Detail der Ausführungsform gemäß Figur 1 in einer perspektivischen Darstellung;
Figur 6 ein Detail der Ausführungsform gemäß Figur 2 in einer perspektivischen Darstellung;
Figur 7 ein Detail der Ausführungsform gemäß Figur 2 in einer Schnittdarstellung;
Figur 8 eine Darstellung des Mähwerks gemäß Figur 3 mit einer Mehrzahl von Ährenhebern in verschiedenen Positionen;
Figur 9 eine weitere Ausführungsform des Ährenhebers anhand eines Details in einer Schnittdarstellung;
Figur 10 die Ausführungsform gemäß Figur 9 in einer perspektivischen Darstellung;
Figur 11 eine weitere Ausführungsform des Ährenhebers anhand eines Details in einer Seitenansicht;
Figur 12 die Ausführungsform gemäß Figur 11, eingestellt auf einen größeren Abstand zwischen dem Mähfinger und der Tragschiene;
Figur 13 ein Detail der Ausführungsform des Ährenhebers gemäß Figur 2 in einer Seitenansicht;
Figur 14 eine weitere Ausführungsform des Ährenhebers anhand eines Details in einer perspektivischen Ansicht;
Figur 15 eine perspektivische Darstellung der Montage der Ausführungsform gemäß Figur 14;
Figur 16 eine weitere Ausführungsform des Ährenhebers anhand eines Details in einer Seitenansicht;
Figur 17 die Ausführungsform gemäß Figur 16 in einer perspektivischen Ansicht;
Figur 18 eine weitere Ausführungsform des Mähwerks mit dem Ährenheber gemäß Figur 16 anhand eines Details in einer Seitenansicht.

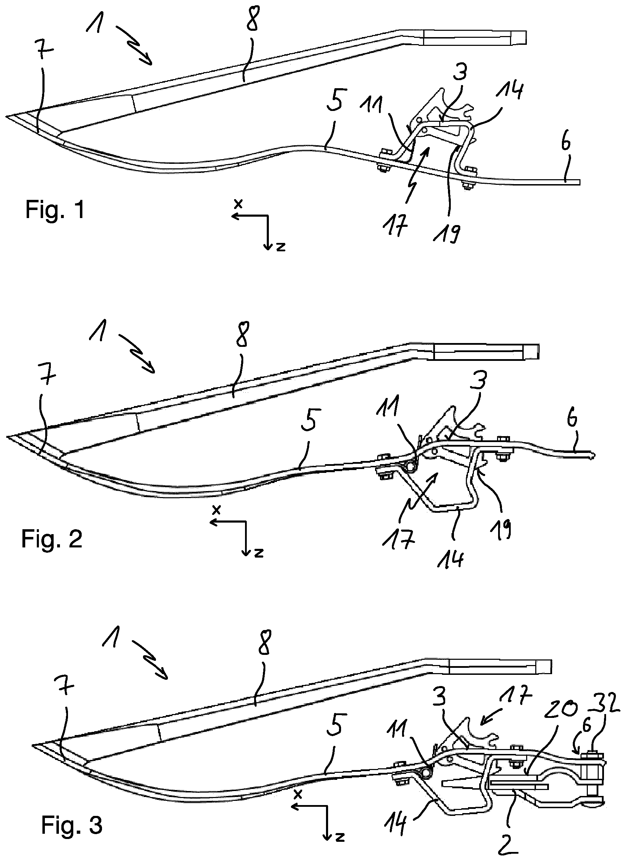

In der Figur 1 ist eine Ausführungsform des Ährenhebers 1 in einer Seitenansicht dargestellt. Ein kartesisches Koordinatensystem mit drei orthogonalen Raumrichtungen ist durch die Pfeile X und Z dargestellt, welche in die X-Richtung bzw. die Z-Richtung weisen. Die dritte Raumrichtung Y entspricht der Blickrichtung in die Zeichnungsebene hinein. Das kartesische Koordinatensystem gilt für sämtliche Figuren und ist dort jeweils mit Pfeilen X, Z und gegebenenfalls Y, bei perspektivischen Darstellungen, angegeben. Gleiche Bezugszeichen in verschiedenen Figuren bezeichnen gleiche Bauteile. Wiederkehrende Bauteile mit gleichen Bezugszeichen werden nicht notwendigerweise wiederholt benannt.

Der in der Figur 1 dargestellte Ährenheber 1 für ein Mähwerk einer Erntemaschine ist dazu vorgesehen, an einem Mähbalken mit Mähfingern (nicht dargestellt) angebracht zu werden. Eine Tragschiene 5 weist dazu ein erstes Ende 6 zum Befestigen an dem Mähbalken auf. An einem zweiten Ende 7 der Tragschiene 5 ist ein Halmheber 8 angeordnet, der dazu dient, abgeknicktes oder lagerndes Halmgut aufzurichten und mähen zu können. Einen Sperrhebel 17 mit einer Stützfläche 19 zum Abstützen an einem der Mähfinger ist in mindestens zwei Positionen gegenüber der Tragschiene festlegbar, um einen Abstand zwischen dem Mähfinger und der Tragschiene 5 einzustellen. Der Sperrhebel 17 kann ein plattenförmiges Bauteil sein, welches beispielsweise aus einer Blechplatte durch Stanzen oder Schneiden hergestellt werden kann. An dem Ährenheber 1 ist eine längliche Ausnehmung 3 vorgesehen, welche in dem dargestellten Ausführungsbeispiel an einer Aufnahme 14 für den Mähfinger ausgebildet ist. Details der Aufnahme 14 und des in der länglichen Ausnehmung 3 angeordneten Sperrhebels 17 werden noch anhand weiterer Darstellungen verdeutlicht. Der Sperrhebel 17 ist entlang der länglichen Ausnehmung 3 verschiebbar geführt. Eine Haupterstreckungsrichtung der länglichen Ausnehmung 3 verläuft im Wesentlichen in einer durch die X-Richtung und die Y-Richtung aufgespannten Ebene. Eine Feder 11 kann den Sperrhebel 17 dabei in einer hinteren Position halten, den Sperrhebel 17 also in Richtung des ersten Endes 6 vorspannen.

In der Figur 2 ist eine weitere Ausführungsform des Ährenhebers 1 in einer Seitenansicht dargestellt. Der Aufbau der Ausführungsform des Ährenhebers 1 ist hinsichtlich der Anordnung der Tragschiene 5 und des Halmheber 8 vergleichbar mit der Ausführungsform gemäß Figur 1. Ein Unterschied der Ausführungsform gemäß Figur 2 besteht darin, dass die Aufnahme 14 für den Mähfinger (nicht dargestellt) auf der von dem Halmheber 8 abgewandten Seite der Tragschiene 5 angeordnet ist. In Einbaulage an dem Mähbalken (nicht dargestellt) befindet sich die Aufnahme 14 somit unter der Tragschiene 5 bzw. auf der dem Erdboden zugewandten Seite der Tragschiene 5. In dem Ausführungsbeispiel des Ährenhebers 1 gemäß Figur 2 ist die längliche Ausnehmung 3 in der Tragschiene 5 ausgebildet. Dadurch lässt sich mit dem Sperrhebel 17 mit der Stützfläche 19 zum Abstützen an dem Mähfinger der Abstand zwischen dem Mähfinger und der Tragschiene 5 einstellen, indem der Sperrhebel 17 in verschiedenen Positionen gegenüber der Tragschiene 5 eingestellt wird. Die Feder 11 spannt den Sperrhebel 17 gegen ein hinteres Ende der länglichen Ausnehmung 3, also in Richtung auf das erste Ende 6, vor.

In der Figur 3 ist eine Ausführungsform eines Mähwerks bzw. einer Mähanordnung mit dem Ährenheber 1 gemäß Figur 2 und dem Mähfinger 2 in einer Seitenansicht dargestellt. Das erste Ende 6 der Tragschiene 5 ist oberhalb des Mähfingers 2 an einem nicht dargestellten Mähbalken durch Befestigungsmittel 32 festgelegt. Die Darstellung dient zur Verdeutlichung des Zusammenwirkens des Sperrhebels 17 an dem Ährenheber 1 mit dem Mähfinger 2. Die Stützfläche 19 (siehe Figur 2) des Sperrhebels 17 stützt sich auf einer der Tragschiene 5 zugewandten Seite 20 des Mähfingers 2 ab. Diese wird nachfolgend auch als Oberseite 20 des Mähfingers 2 bezeichnet. Wenn der Sperrhebel 17 in einer der mindestens zwei Positionen gegenüber der Tragschiene 5 festgelegt ist, dann bildet der Sperrhebel 17 einen Abstandhalter zwischen der Tragschiene 5 und dem Mähfinger 2. Die Tragschiene 5 ist gegenüber einer spannungsfreien Position nach oben in negativer Z-Richtung ausgelenkt und übt somit eine Federkraft in der Z-Richtung aus, welche über den Sperrhebel 17 auf die Oberfläche 20 des Mähfingers 2 wirkt. Das erste Ende 6 der Tragschiene 5 ist oberhalb des Mähfingers 2 an dem Mähbalken befestigt. Dadurch weist das Mähwerk in seinem unteren Bereich vorteilhaft mehr Freiraum auf. Der oberhalb des Mähfingers 2 befestigte Ährenheber 1 weist die Aufnahme 14 daher auf der von dem Halmheber 8 abgewandten Unterseite der Tragschiene 5 auf.

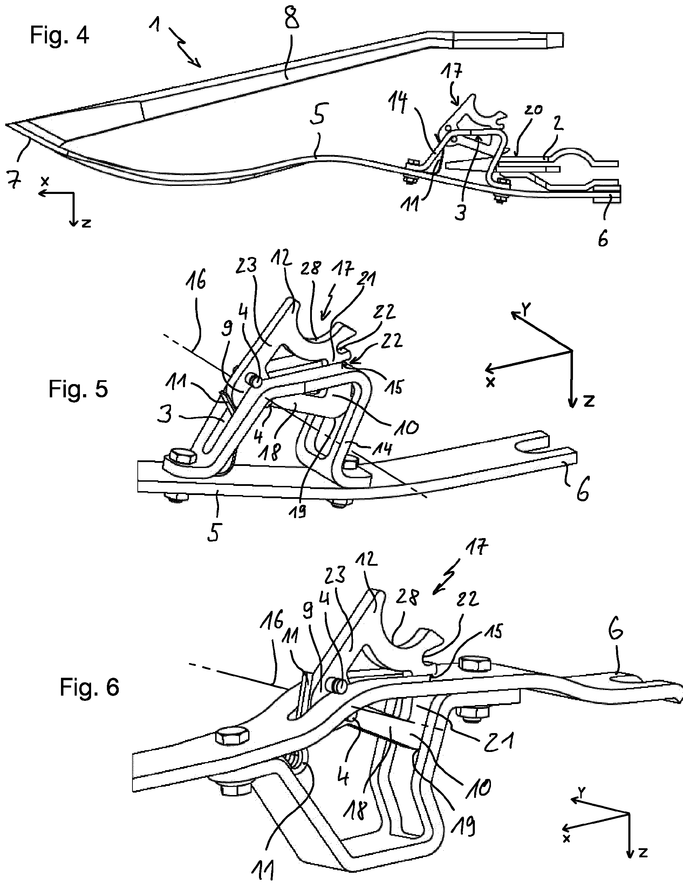

In der Figur 4 ist eine weitere Ausführungsform des Mähwerks bzw. der Mähanordnung in einer Seitenansicht dargestellt, wobei der Ährenheber 1 gemäß Figur 1 mit dem Mähfinger 2 an dem nicht dargestellten Mähbalken befestigt ist. Der Ährenheber 1 ist unterhalb des Mähfingers 2 angeordnet, sodass der Mähfinger 2 sich zwischen der Tragschiene 5 und dem Halmheber 8 befindet. Dementsprechend ist die Aufnahme 14 für den Mähfinger 2 ebenfalls auf der dem Halmheber 8 zugewandten Oberseite der Tragschiene 5 befestigt. Die längliche Ausnehmung 3 zur Aufnahme des Sperrhebels 17 könnte grundsätzlich auch in dieser Ausführungsform in der Tragschiene 5 ausgeführt sein. Eine vorteilhaft einfachere Gestaltung des Sperrhebels 17 wird aber dadurch ermöglicht, dass die längliche Ausnehmung 3 in der Aufnahme 14 ausgeführt ist. Die Stützfläche 19 (siehe Figur 1) stützt sich auf der Oberseite 20 des Mähfingers 2 ab. Wenn der Sperrhebel 17 in einer der mindestens zwei Positionen gegenüber der Tragschiene 5 festgelegt ist, bildet der Sperrhebel 17 einen Abstandhalter zwischen dem Mähfinger 2 und der Tragschiene 5. Die Festlegung des Sperrhebels 17 erfolgt an der Aufnahme 14, die fest mit der Tragschiene 5 verbunden ist. Die in der Z-Richtung wirkende Federkraft der ausgelenkten Tragschiene 5 wirkt somit über die Aufnahme 14 und den Sperrhebel 17 auf den Mähfinger 2.

Die zwei Ausführungsformen des Ährenhebers 1 gemäß der Figuren 1 und 2 können als grundlegende Ausführungsformen bezeichnet werden, die sich gemeinsam dadurch auszeichnen, dass die Stützfläche 19 dazu vorgesehen ist, mit der der Tragschiene 5 zugewandten Seite 20 des Mähfingers 2 in Kontakt zu sein oder in Kontakt gebracht zu werden. Nachfolgend werden weitere Details der grundlegenden Ausführungsformen anhand weiterer Darstellungen erläutert.

Anhand der Figuren 5 bis 8 werden die Ausführungsformen gemäß der Figuren 1 und 2 näher erläutert. Die Figur 5 zeigt ein Detail des unter dem Mähfinger 2 anzuschraubenden Ährenhebers 1 gemäß Figur 2 in einer perspektivischen Darstellung eines Teils der Tragschiene 5 mit dem hinteren Ende 6 und der auf der Oberseite der Tragschiene 5 befestigten Aufnahme 14 für den nicht dargestellten Mähfinger 2. Die längliche Ausnehmung 3 in der Aufnahme 14 ist durchgehend ausgeführt und kann auch als Langloch 3 bezeichnet werden. Der Sperrhebel 17 weist mehrere Rastausnehmungen 22 auf, wobei eine der Rastausnehmungen 22 mit einem Rastabschnitt 15 an einem Randbereich der länglichen Ausnehmung 3 zusammenwirkt, um den Sperrhebel 17 in einer seiner Positionen gegenüber der Tragschiene 5 festzulegen. Die Feder 11 in Form einer Blattfeder ist mit der Tragschiene 5 und/oder mit der Aufnahme 14 verbunden und kann sich durch die längliche Ausnehmung 3 hindurch erstrecken, um den Sperrhebel 17 gegen den Rastabschnitt 15 vorzuspannen und so in der Position zu halten.

Die Figur 6 zeigt ein Detail des oberhalb des Mähfingers 2 anzuschraubenden Ährenhebers 1 gemäß Figur 1 in einer perspektivischen Darstellung eines Teils der Tragschiene 5 mit dem hinteren Ende 6 und der auf der Unterseite der Tragschiene 5 befestigten Aufnahme 14 für den nicht dargestellten Mähfinger 2. Die längliche Ausnehmung 3 in der Tragschiene 5 ist durchgehend ausgeführt. Eine der Rastausnehmungen 22 an dem Sperrhebel 17 wirkt mit dem Rastabschnitt 15 an einem Randbereich der länglichen Ausnehmung 3 zusammen, um den Sperrhebel 17 festzulegen. Der Randbereich der länglichen Ausnehmung 3 ist in dieser Ausführungsform an der Tragschiene 5 ausgebildet. Die Feder 11 in Form einer Spiralfeder ist mit der Tragschiene 5 verbunden und kann sich durch die längliche Ausnehmung 3 hindurch erstrecken, um den Sperrhebel 17 gegen den Rastabschnitt 15 vorzuspannen und so in der Position zu halten. Die in den Figuren 5 und 6 dargestellten Formen der Feder 11 sind nicht den Ausführungsformen zugeordnet und können ausgetauscht oder auf andere Weise gestaltet werden.

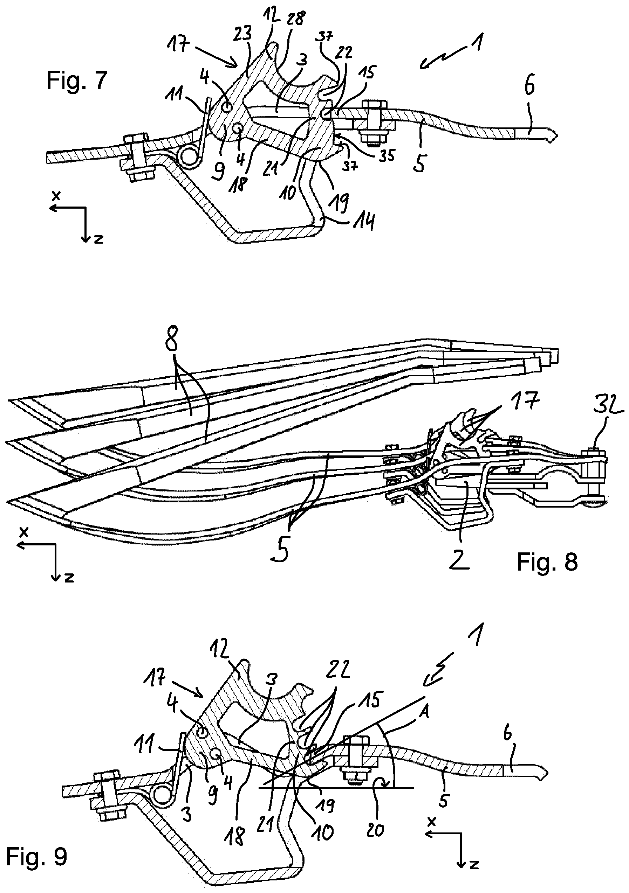

Nachfolgend werden die Ausführungsformen gemäß der Figuren 5 und 6 zusätzlich mit Bezug auf die Figuren 7 und 8 gemeinsam beschrieben, da die Merkmale des Sperrhebels 17 bei beiden Ausführungsformen übereinstimmen. Die Figur 7 zeigt die Ausführungsform gemäß Figur 6 in einem Längsschnitt in der durch die X-Richtung und die Z-Richtung aufgespannten Ebene durch den Ährenheber 1. Der Sperrhebel 17 könnte ebenso in der länglichen Ausnehmung 3 der Ausführungsform gemäß Figur 5 angeordnet sein. In der Darstellung ist diejenige Rastausnehmung 22 des Sperrhebels 17 mit dem Rastabschnitt 15, an der Aufnahme 14 oder an der Tragschiene 5, in Eingriff, die näher an der Stützfläche 19 angeordnet ist. Es ist erkennbar, dass der Abstand zwischen der Tragschiene 5 und dem Mähfinger 2 in beiden Ausführungsformen davon abhängig ist, welche der Rastausnehmungen 22 den Rastabschnitt 15 aufnimmt. Der Rastabschnitt 15 wird von dem hinteren Randbereich der länglichen Ausnehmung 3 gebildet, wobei als hinterer Rand das dem ersten Ende 6 zugewandte Ende der länglichen Ausnehmung 3 zu verstehen ist, unabhängig davon, ob dieser an der Aufnahme 14 oder an der Tragschiene 5 ausgebildet ist. Der Sperrhebel 17 ist durch die Spannfeder 11 in Richtung des Rastabschnitts 15 vorgespannt und wird so in der jeweiligen Position gehalten. Dadurch wird eine Höheneinstellung des Ährenhebers gegenüber dem Mähwerk realisiert, wie in der Figur 8 zu erkennen ist.

Um die Rastausnehmungen 22 wechselweise mit dem Rastabschnitt 15 verbinden zu können, ist der Sperrhebel 17 schwenkbar in der länglichen Ausnehmung 3 angeordnet. Eine sich ergebende Schwenkachse 16, um die der Sperrhebel 17 schwenkt, stellt dabei keine durch körperlichen Merkmale gebildete Achse da, da der Sperrhebel 17 in dem dargestellten Ausführungsbeispiel durch Zapfen 4 in dem Langloch 3 gehalten ist. Die Zapfen 4 erstrecken sich quer zu der Haupterstreckungsrichtung des Langlochs 3 im Wesentlichen in der Y-Richtung und sind beiderseits des Bauteils mit dem Langloch 3, also der Aufnahme 14 oder der Tragschiene 5, angeordnet. Dadurch ist der Sperrhebel 17 entlang des Langlochs 3 verschiebbar und schwenkbar gehalten. Die Schwenkachse 16 erstreckt sich quer zu der durch die X-Richtung und die Z-Richtung aufgespannt Ebene, etwa in der Y-Richtung und etwa mittig zwischen den zwei Zapfen 4. In den Figuren 5 und 6 ist die Lage der Schwenkachse 16 angedeutet, in der Figur 7 erstreckt sie sich etwa in der Y-Richtung, senkrecht zur Zeichenebene, zwischen den zwei Zapfen 4. Da der Sperrhebel 17 mit Spiel in der länglichen Ausnehmung 3 einsitzt, kann die Richtung der Schwenkachse 16 gegenüber der Y-Richtung geringfügig variieren. Gegenüber einem Verbindungsabschnitt 9 des Sperrhebels 17, an dem die Zapfen 4 angeordnet sind, ist die Schwenkachse 16 ortsfest und wird dementsprechend mit dem Sperrhebel 17 entlang des Langlochs 3 bewegt.

Der Verbindungsabschnitt 9, der den Sperrhebel 17 um die Schwenkachse 16 schwenkbar in der länglichen Ausnehmung 3 hält, ist entlang der länglichen Ausnehmung 3 bzw. in der X-Richtung beanstandet zu einem Stützabschnitt 10 des Sperrhebels 17 angeordnet. In dem dargestellten Ausführungsbeispiel ist der Verbindungsabschnitt 9 über einen ersten Schenkel 18 mit dem Stützabschnitt 10 verbunden. Ein der Tragschiene 5 zugewandter Rand des Stützabschnitts 10 bildet die Stützfläche 19. An dem Stützabschnitt 10 sind auch die Rastausnehmungen 22 ausgebildet, wobei die Rastausnehmungen 22 in verschiedenen Abständen zu der Stützfläche 19 angeordnet sind. Dazu weist der Stützabschnitt 10 einen zweiten Schenkel 21 auf, der gegenüber dem ersten Schenkel 18 abgewinkelt ist und an dem die Rastausnehmungen 22 angeordnet sind. Die Stützfläche 19 ist an einer dem Mähfinger 2 (siehe Figuren 3 und 4) zugewandten Seite des Stützabschnitts 10 angeordnet, während der zweite Schenkel 21, bzw. die Rastausnehmungen 22, auf einer von der Stützfläche 19 abgewandten Seite des Stützabschnitts 10 angeordnet sind.

Der Sperrhebel 17 kann einen Betätigungsabschnitt 12 zur manuellen Betätigung aufweisen, der eine konkave Form 28 zur ergonomischen Aufnahme eines Fingers eines Bedieners aufweist. Die konkave Form 28 kann sich zu dem ersten Ende 6 hin öffnen, wodurch eine vorteilhafte Betätigung mit dem Daumen ermöglicht wird, während die übrigen Finger der Hand des Bedieners unter die Tragschiene 5 greifen können. So lässt sich der Sperrhebel 17 gegen die Kraft der Feder 11 in Richtung des zweiten Endes 7 ziehen, um die Rastausnehmung 22 von dem Rastabschnitt 15 zu lösen. Mit den unter die Tragschiene 5 greifenden Fingern des Bedieners lässt sich die Tragschiene 5 in der gewünschten Höhe einstellen und den Sperrhebel 17 beispielsweise mit einer anderen Rastausnehmung 22 wieder an dem Rastabschnitt 15 festlegen. Die Höhenverstellung ist daher ohne Werkzeug und grundsätzlich auch mit nur einer Hand zu bewerkstelligen. Der Betätigungsabschnitt 12 ist auf einer von der Stützfläche 19 abgewandten Seite der Rastausnehmungen 22 bzw. des zweiten Schenkels 21 angeordnet, sodass der Betätigungsabschnitt 12 vorteilhaft nach oben aus dem Langloch 3 herausragt. Der Betätigungsabschnitt 12 kann beispielsweise mit dem zweiten Schenkel 21 verbunden sein und über einen dritten Schenkel 23 mit dem Verbindungsabschnitt 9 verbunden sein, sodass der Sperrhebel 17 eine stabile, ringförmig geschlossene Form bildet. Die in dem Ausführungsbeispiel gezeigten zwei Rastausnehmungen 22 entsprechen zwei verschiedenen Höheneinstellungen der Tragschiene 5. In beiden Höheneinstellungen ist die Tragschiene 5 nach oben ausgelenkt. Es ergibt sich eine dritte Höheneinstellung, bei der die Rastschiene 5 nicht ausgelenkt ist. Ist in dem Fall liegt eine Fläche 35 an dem zweiten Schenkel 21 an dem Rastabschnitt 15 an, da der Sperrhebel 17 nicht gegen die Federkraft der Tragschiene 5 in der Position festgelegt sein muss. Der zweite Schenkel 21 weist an beiden Enden in Richtung zu dem ersten Ende 6 hervorstehende Anschläge 37 auf, die mit der Ober- bzw. Unterseite der Tragschiene 5, oder der Aufnahme 14, im Bereich des Rastabschnitts 15 zusammenwirken und so den einen Schwenkbereich des Sperrhebels 17 begrenzen.

Die Figur 8 zeigt eine Darstellung des Mähwerks mit einer Mehrzahl von in Blickrichtung bzw. Y-Richtung hintereinander angeordneten Ährenhebern 1, bzw. eine Mehrzahl der Mähanordnungen, hier beispielhaft mit den Ährenhebern 1 in der Ausführungsform gemäß Figur 2. Die drei Ährenheber 1 weisen drei verschiedene Höheneinstellungen auf, bei denen die Tragschiene 5 jeweils in einer anderen Position bzw. in einem anderen Winkel gegenüber dem Mähfinger 2 eingestellt ist. Jede der Höheneinstellungen entspricht einer der Positionen des Sperrhebels 17. Mit Bezug auf die Figuren 3 und 4 ist zu erkennen, dass der Ährenheber 1 gemäß Figur 4 gegenüber dem Mähwerk höher eingestellt wird, indem der Abstand der Tragschiene 5 zu dem Mähfinger 2 verringert wird, während der Ährenheber 1 gemäß Figur 3 gegenüber dem Mähwerk höher eingestellt wird, indem der Abstand der Tragschiene 5 zu dem Mähfinger 2 vergrößert wird.

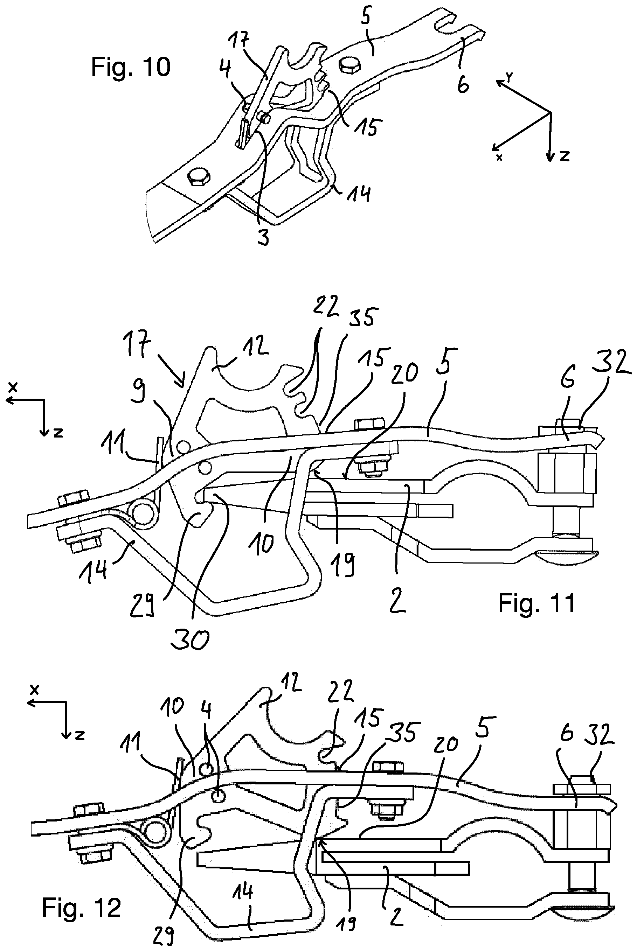

Mit Bezug auf die Figuren 9 und 10, die gemeinsam beschrieben werden, wird eine weitere Ausführungsform des Mähfingers 1 beschrieben. Die Ausführungsform basiert auf der grundlegenden Ausführungsform gemäß Figur 2, lässt sich aber auch auf die grundlegende Ausführungsform gemäß Figur 1 übertragen, indem die nachfolgend beschriebenen Merkmale hinsichtlich der länglichen Ausnehmung 3 und der Tragschiene 5 auf eine längliche Ausnehmung 3 an der Aufnahme 14 übertragen werden. Gemäß der Ausführungsform ist vorgesehen, dass der Rastabschnitt 15 mit der hier lediglich angedeuteten Oberfläche 20 des Mähfingers 2 einen spitzen Winkel A einschließt. Die Oberfläche 20 des Mähfingers 2 ist in der Einbaulage am Mähwerk in der Regel etwa horizontal ausgerichtet, also parallel zu einer durch die X-Richtung und die Y-Richtung aufgespannten Ebene. Ein Vorteil der Ausführungsform besteht darin, dass die in der Z-Richtung wirkende Federkraft der entgegen der Z-Richtung ausgelenkten Tragschiene 5 den Sperrhebel 17 in seiner Position hält. Der Rastabschnitt 15 wirkt mit einem von dem Winkel A abhängigen Anteil der Federkraft in Richtung der Rastausnehmung 22, die über den zweiten Schenkel 21 und die Stützfläche 19 an der Oberfläche 20 des Mähfingers abgestützt ist. Der Winkel A hat dabei beispielsweise ein Winkelmaß von mindestens 10°, insbesondere von 20° bis 30°. Die Öffnungen der Rastausnehmungen 22 an dem zweiten Schenkel 21 des Stützabschnitts 10 sind dem Rastabschnitt 15 entsprechend ausgerichtet. Die abgewinkelte Form des Rastabschnitts 15 wird in dem dargestellten Ausführungsbeispiel dadurch erreicht, dass die längliche Ausnehmung 3 in Richtung ihrer Längserstreckung einen S-förmigen Verlauf oder einen Z-förmigen Verlauf aufweist. Die Feder 11 beaufschlagt den Sperrhebel 17 im Bereich des Verbindungsabschnitts 9 mit einer Federkraft in Richtung des ersten Endes 6 und hält dieses dadurch zusätzlich in seiner Position.

Der Sperrhebel 17 unterscheidet sich bei diesem Ausführungsbeispiel zusätzlich dadurch von den zuvor beschriebenen Ausführungsformen, dass drei Rastausnehmungen 22 vorgesehen sind, die es ermöglichen, den Ährenheber 1 in drei verschiedenen Höheneinstellungen festzulegen. Die drei Rastausnehmungen 22 können in jedem der Ausführungsbeispiele, die in dieser Anmeldung beschrieben sind, realisiert sein.

Mit Bezug auf die Figuren 11 und 12 wird nachfolgend ein weiteres Ausführungsbeispiel des Mähwerks bzw. der Mähanordnung beschrieben. Die Figuren 11 und 12 zeigen jeweils das Mähwerk bzw. die Mähanordnung bestehend aus dem Mähfinger 2 und dem Ährenheber 1, der nur teilweise dargestellt ist. Der Ährenheber 1 und der Mähfinger 2 sind mit Befestigungsmitteln 32 an dem nicht dargestellten Mähbalken befestigt. Die gezeigte Ausführungsform bezieht sich auf die grundlegende Ausführungsform gemäß Figur 2. Die sich auf den Sperrhebel 17 beziehenden Merkmale lassen sich jedoch auch auf die grundlegende Ausführungsform gemäß Figur 1 übertragen. In dem dargestellten Ausführungsbeispiel weist der Sperrhebel 17 einen Betätigungshaken 29 zur Betätigung durch den Mähfinger 2 auf, wobei der Betätigungshaken 29 dazu ausgebildet ist, eine Spitze 30 des Mähfinger 2 derart zu umfassen, dass der Sperrhebel 17 bei einem Verändern des Abstands zwischen dem Mähfinger 2 und der Tragschiene 5 in eine der Positionen verstellt wird und einrastet. In der Figur 11 ist der Ährenheber 1 in seiner niedrigsten Position eingestellt. Für diese niedrigste Einstellposition muss der Sperrhebel 17 nicht notwendigerweise in einer Position festgelegt sein, da die in der Z-Richtung wirkende Kraft der Tragschiene 5 nicht über den Sperrhebel 17 auf den Mähfinger 2 wirkt und der Sperrhebel 17 keine Funktion als Abstandhalter zwischen dem Ährenheber 1 und dem Mähfinger 5 hat. An dem Rastbereich 15 am hinteren Rand der länglichen Ausnehmung 3 liegt die Fläche 35 des Stützbereichs 10 an. Die Rastausnehmungen 22 schließen sich an die Fläche 35 auf der der Stützfläche 19 gegenüberliegenden Seite an. An dem Verbindungsabschnitt 9 des Sperrhebels 17 ist der Betätigungshaken 29 angeordnet, der so geformt ist, dass er die Mähfingerspitze 30 in der in Figur 11 dargestellten Höheneinstellung umgreift. Dadurch lässt sich der Ährenheber 1 vorteilhaft ohne eine manuelle Betätigung des Sperrhebels 17 in eine der Positionen überführen. Bei einem Auslenken der Tragschiene 5 nach oben, also entgegen der Z-Richtung, wird der Abstand zwischen der Tragschiene 5 und der Oberfläche 20 des Mähfingers 2 vergrößert. Durch den unter die Mähfingerspitze 30 greifenden Betätigungshaken 29 wird der Sperrhebel 17 im Uhrzeigersinn verschwenkt. Aufgrund der Form des Betätigungshakens 29 und der Verschiebbarkeit des Sperrhebels 17 entlang der länglichen Ausnehmung 3 rutschte der Betätigungshaken 29 bei fortgesetzter Auslenkung der Tragschiene 5 von der Mähfingerspitze 30 ab, wie in der Figur 12 gezeigt. Der Sperrhebel 17 wurde zuvor soweit im Uhrzeigersinn verschwenkt, dass eine der Rastausnehmungen 22 den Rastbereich 15 erreicht und die Kraft der Feder 11 den Sperrhebel 17 in einer der Positionen einrasten lässt. Je nach Formgebung des Betätigungshakens 29 kann ein Einrasten in die obere oder die untere Rastausnehmung 22 herbeigeführt werden.

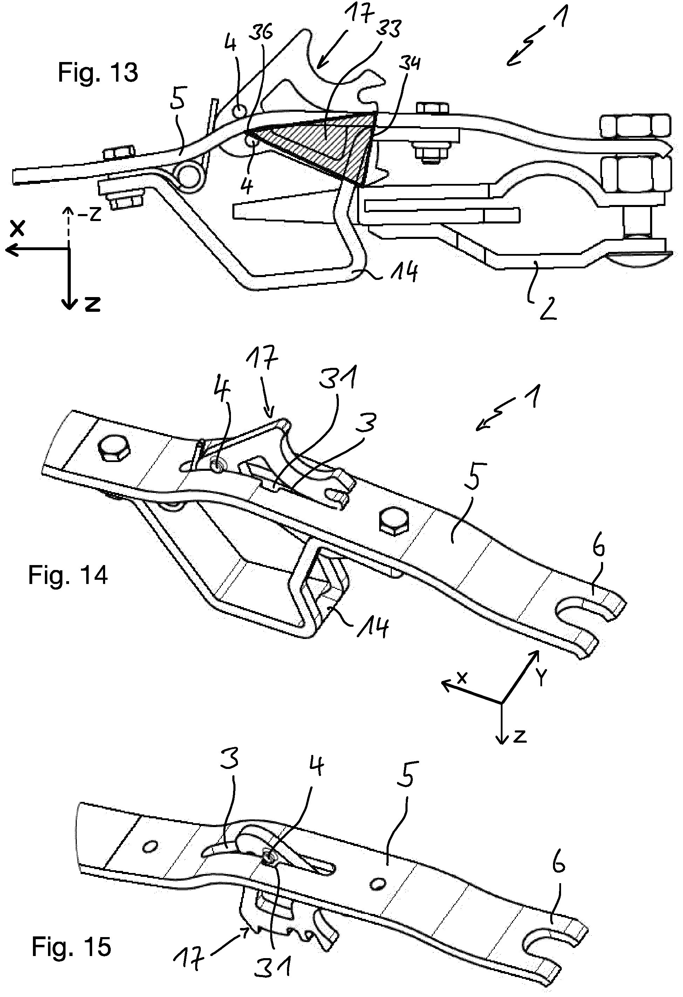

Die Figur 13 zeigt ein Detail der Ausführungsform des Ährenhebers 1 gemäß Figur 2 in einer Seitenansicht. Ein weiterer Vorteil der Ausführungsform, der auch auf weitere Ausführungsformen zutrifft, wird mit Bezug auf die Figur 13 erläutert. Der Sperrhebel 17 wirkt bezüglich einer Biegebeanspruchung der Tragschiene 5 im Bereich der länglichen Ausnehmung 3 versteifend, wobei die versteifende Wirkung des Sperrhebels 17 in einer ersten Biegerichtung in der Z-Richtung größer ist, als in einer zweiten, der ersten Biegerichtung entgegengesetzten Biegerichtung, die mit -Z bezeichnet ist. Die Tragschiene 5 wird im Betrieb regelmäßig auf Biegung beansprucht. Durch Bodenunebenheiten oder aus dem Erdreich herausragende Steine wird die Tragschiene 5 häufig nach oben, also in der zweiten Biegerichtung -Z ausgelenkt, weswegen die Tragschiene 5 entsprechend elastisch ausgelegt sein muss, um daraus resultierende Schäden zu vermeiden. Bei einem Eindringen des zweiten Endes 7 der Tragschiene 5 in das Erdreich kann es auch zu einer Auslenkung nach unten in der ersten Biegerichtung Z kommen. Dies ist unerwünscht, da der Ährenheber 1 sich dabei in das Erdreich eingraben und zerstört werden kann. Abgebrochene Teile des zerstörten Ährenhebers können wiederum erheblichen weiteren Schaden an der Erntemaschine verursachen. Aus diesem Grund ist es vorteilhaft, wenn die Tragschiene 5 in der ersten Biegerichtung Z steifer ist als in der zweiten Biegerichtung -Z. Eine solche versteifende Wirkung des Sperrhebels 17 ist hier gegeben und durch das zur Erläuterung eingezeichnete Dreieck 33 illustriert. Eine Basis 34 des Dreiecks 33 entspricht dem Abstand, der durch den Sperrhebel 17 zwischen der Oberfläche 20 des Mähfingers 2 und der Tragschiene 5, genauer dem Rastbereich 15, festgelegt ist. Eine Spitze 36 des Dreiecks 33 bezeichnet den Punkt des Befestigungsabschnitts 9, in dem die Tragschiene 5 zwischen den Zapfen 4 eingespannt ist und der über den ersten Schenkel 18 mit der Basis 34 verbunden ist. Der zwischen der Spitze 36 und der Basis 34 liegende Bereich der Tragschiene 5 kann nicht nach unten in der ersten Biegerichtung Z ausgelenkt werden, wohl aber in der entgegengesetzten zweiten Biegerichtung -Z.

Mit Bezug auf die Figuren 14 und 15 werden weitere Ausführungsformen des Ährenhebers 1 beschrieben. Die Figur 14 zeigt eine weitere Ausführungsform des Ährenhebers 1 anhand eines Details in einer perspektivischen Ansicht. Die gezeigte Ausführungsform entspricht der grundlegenden Ausführungsform gemäß Figur 2. Die sich auf die längliche Ausnehmung 3 und den Sperrhebel 7 beziehenden Merkmale diese Ausführungsform lassen sich auch auf die grundlegende Ausführungsform gemäß Figur 1 übertragen. Der als Platte ausgeführte Sperrhebel 17 weist die zwei Zapfen 4 auf, die von mindestens einer Oberfläche der Platte hervorstehen, um den Sperrhebel 17 schwenkbar und verschiebbar in der länglichen Ausnehmung 3 zu halten. Die Zapfen 4 können beiderseits des Sperrhebels in Y-Richtung aus den Oberflächen der Platte hervorstehen, oder nur von einer der Oberflächen. Mindestens einer der Zapfen 4 kann als Stift ausgebildet sein, der in einer Bohrung in dem Sperrhebel 17 einsitzt. Ein Vorteil besteht darin, dass der mindestens eine Stift in den Sperrhebel 17 einsetzbar ist, nachdem der Sperrhebel 17 in der länglichen Ausnehmung 3 positioniert ist. Der Sperrhebel 17 ist dann formschlüssig bezüglich aller Raumrichtungen mit der Tragschiene 5 oder der Aufnahme 14 verbunden.

In der dargestellten Ausführungsform ist mindestens einer der Zapfen 4 einteilig mit dem Sperrhebel 17 ausgebildet, was beispielsweise dadurch erreicht werden kann, dass der Zapfen 4 als Napf oder als Ausklinkung durch einen Umformprozess hergestellt ist. Die Herstellung des Zapfens 4 kann gleichzeitig dabei vorteilhaft mit der Herstellung des Sperrhebels 17 erfolgen, was die Produktion des Sperrhebels 17 erheblich vereinfacht. Der andere Zapfen 4 kann als Stift ausgeführt sein, der nachträglich in den Sperrhebel 17 einsetzbar ist. Eine weitere Vereinfachung der Herstellung ergibt sich, wenn beide Zapfen 4 einteilig mit dem Sperrhebel 17 ausgebildet sind, wie in der dargestellten Ausführungsform gezeigt. In dem Fall ist an der länglichen Ausnehmung 3 eine sich quer zu der Längserstreckung der länglichen Ausnehmung 3 erstreckende Ausformung 31 vorgesehen, die auch als Ausklinkung oder Verbreiterung der länglichen Ausnehmung 3 bezeichnet werden kann.

In der Figur 15 ist in einer perspektivischen Darstellung die Montage dieser Ausführungsform illustriert, bei der der Sperrhebel 17 in die längliche Ausnehmung 3 derart eingesetzt wird, dass der Zapfen 4 durch die Ausformung 31 geführt wird. In der Figur 14 ist zu erkennen, dass der Zapfen 4 in montiertem Zustand des Ährenhebers 1 die etwa mittig an der längliche Ausnehmung 3 angeordnete Ausformung 31 nicht erreichen kann und somit im Betrieb nicht verloren werden kann. Auch an dem einzelnen Ährenheber 1 in nicht montiertem Zustand ist der Sperrhebel 17 sicher mit dem Ährenheber 1 verbunden, solange eine der Rastausnehmungen 22 mit dem Rastbereich 15 verbunden ist und die Feder 11 den Sperrhebel 17 in Richtung auf das erste Ende 6 mit einer Kraft beaufschlagt.

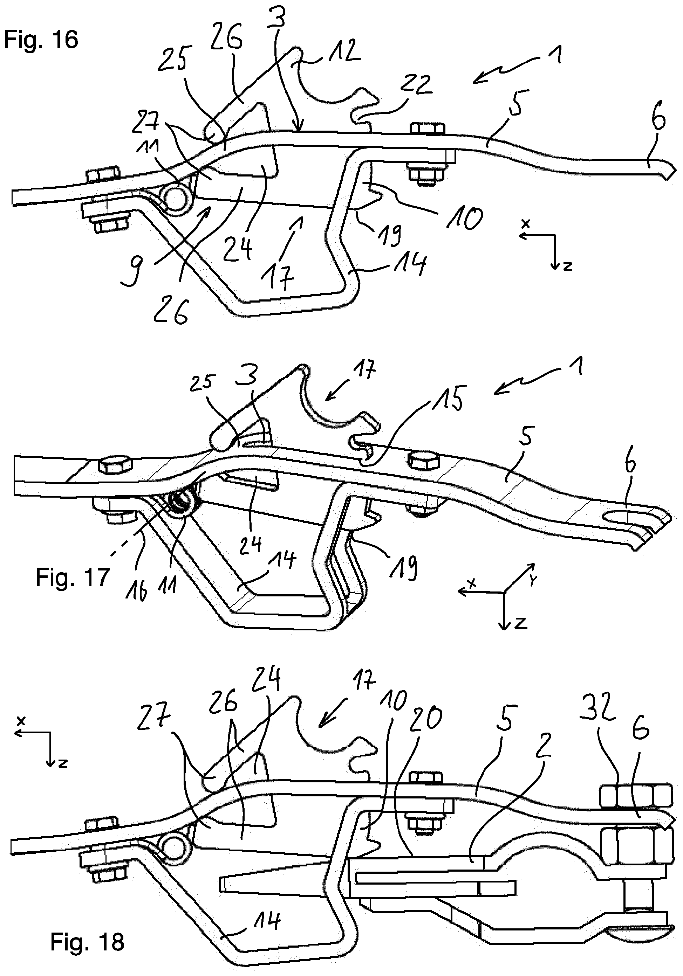

Weitere Ausführungsformen des Ährenhebers 1 und des Mähwerks bzw. der Mähanordnung werden mit Bezug auf die Figuren 16 bis 18 beschrieben. Die Figur 16 zeigt eine weitere Ausführungsform des Ährenhebers 1 anhand eines Details in einer Seitenansicht. Die Figur 17 zeigt die Ausführungsform gemäß Figur 16 in einer perspektivischen Ansicht. In der Figur 18 ist eine weitere Ausführungsform des Mähwerks bzw. der Mähanordnung mit dem Ährenheber 1 gemäß Figur 16 in einer Seitenansicht gezeigt. Die Figuren 16 bis 18 werden nachfolgend gemeinsam beschrieben. Die Ausführungsform wird auf Basis der grundlegenden Ausführungsform gemäß Figur 2 beschrieben, wobei Unterscheidungsmerkmale der länglichen Ausnehmung 3 und des Sperrhebels 17 auf die grundlegende Ausführungsform gemäß Figur 1 übertragbar sind. Der Sperrhebels 17 weist eine Verbindungsausnehmung 24 auf, welche dazu vorgesehen ist, einen Verbindungsrandbereich 25 der länglichen Ausnehmung 3 aufzunehmen. Die Verbindungsausnehmung 24 ist an dem Verbindungsabschnitt 9 gebildet. Der Verbindungsrandbereich 25 ist an einem dem Rastbereich 15 gegenüberliegenden vorderen Ende der länglichen Ausnehmung 3 angeordnet. Durch den in die Verbindungsausnehmung 24 aufgenommenen Verbindungsrandbereich 25 besteht eine in der Z Richtung formschlüssige Verbindung zwischen der Tragschiene 5, bzw. der Aufnahme 14, und dem Sperrhebel 17. Die Zapfen 4 der zuvor beschriebenen Ausführungsformen können dadurch vorteilhaft entfallen, was die Herstellung des Sperrhebels 17 weiter vereinfacht. In der perspektivischen Darstellung der Figur 17 ist erkennbar, dass die längliche Ausnehmung 3 eine entsprechend geringere Ausdehnung in ihrer Haupterstreckungsrichtung aufweist. Die Verbindungsausnehmung 24 ist von Stegen 26 begrenzt, deren Endabschnitte 27 den Verbindungsrandbereich 25 zwischen sich aufnehmen, bzw. an dem Verbindungsrandbereich 25 anliegen. Die Spannfeder 11 ist in dem Ausführungsbeispiel nicht durch die längliche Ausnehmung 3 hindurch geführt, sondern wirkt auf einen der Endabschnitte 27 an einem der Stege 26. In der gezeigten Ausführungsform ist der Sperrhebel 17 ebenfalls entlang der länglichen Ausnehmung 3 verschiebbar, sodass die Rastausnehmungen 22 mit dem Rastbereich 15 verbunden und wieder gelöst werden können. Die Schwenkachse 16, die sich aus der Schwenkbarkeit des Sperrhebels 17 ergibt, verläuft etwa parallel zu der Y Richtung zwischen den Endabschnitten 27.

### Bezugszeichenliste

- 1: Ährenheber
- 2: Mähfinger
- 3: Längliche Ausnehmung
- 4: Zapfen
- 5: Tragschiene
- 6: Erstes Ende
- 7: Zweites Ende
- 8: Halmheber
- 9: Verbindungsabschnitt
- 10: Stützabschnitt
- 11: Spannfeder
- 12: Betätigungsabschnitt
- 14: Aufnahme für den Mähfinger
- 15: Rastabschnitt
- 16: Schwenkachse
- 17: Sperrhebel
- 18: Erster Schenkel
- 19: Fläche
- 20: Der Tragschiene zugewandte Seite des Mähfingers
- 21: Zweiter Schenkel
- 22: Rastausnehmungen
- 23: Dritter Schenkel
- 24: Verbindungsausnehmung
- 25: Verbindungsrandbereich
- 26: Randbereiche
- 27: Endabschnitte
- 28: Konkave Form
- 29: Betätigungshaken
- 30: Spitze des Mähfingers
- 31: Ausformung
- 32: Befestigungsmittel
- 33: Dreieck
- 34: Basis
- 35: Fläche
- 36: Spitze
- 37: Anschlag
- A: Winkel
- X, Y, Z: Raumrichtungen

## Patentansprüche

1. Ährenheber für ein Mähwerk einer Erntemaschine mit Mähfingern (2), die an einem Mähbalken angebracht sind, wobei der Ährenheber eine Tragschiene (5) mit einem ersten Ende (6) zum Befestigen an dem Mähbalken, einen mit einem zweiten Ende (7) der Tragschiene (5) verbundenen Halmheber (8) und einen Sperrhebel (17) aufweist,
wobei der Sperrhebel (17) eine Stützfläche (19) zum Abstützen an einem der Mähfinger (2) aufweist und in mindestens zwei Positionen gegenüber der Tragschiene (5) festlegbar ist, um einen Abstand zwischen dem Mähfinger und der Tragschiene einzustellen,
wobei eine längliche Ausnehmung (3) an dem Ährenheber vorgesehen ist und der Sperrhebel (17) in der länglichen Ausnehmung verschiebbar geführt ist,
**dadurch gekennzeichnet,**
**dass** der Sperrhebel (17) Rastausnehmungen (22) aufweist, wobei je Position eine der Rastausnehmungen mit einem Rastabschnitt (15) an einem Randbereich der länglichen Ausnehmung (3) zusammenwirkt, um den Sperrhebel in der jeweiligen Position festzulegen.

2. Ährenheber nach Anspruch 1, **dadurch gekennzeichnet, dass** die längliche Ausnehmung (3) in der Tragschiene (5) angeordnet ist oder dass die längliche Ausnehmung (3) in einer an der Tragschiene (5) angeordneten Aufnahme (14) für den Mähfinger (2) angeordnet ist.

3. Ährenheber nach einem der Ansprüche 1 oder 2, **dadurch gekennzeichnet, dass** der Sperrhebel (17) schwenkbar in der länglichen Ausnehmung (3) angeordnet ist, wobei eine sich ergebende Schwenkachse (16) quer zu einer Längserstreckung der länglichen Ausnehmung verläuft und in Richtung der Längserstreckung der länglichen Ausnehmung verlagerbar ist.

4. Ährenheber nach Anspruch 3, **dadurch gekennzeichnet, dass** der Sperrhebel (17) in der länglichen Ausnehmung nebeneinander angeordnet einen Verbindungsabschnitt (9) und einen Stützabschnitt (10) aufweist, wobei der Sperrhebel an dem Verbindungsabschnitt schwenkbar um die Schwenkachse (16) in der länglichen Ausnehmung (3) gehalten ist und wobei die Stützfläche (19) und die Rastausnehmungen (22) an dem Stützabschnitt (10) ausgebildet sind.

5. Ährenheber nach Anspruch 4, **dadurch gekennzeichnet, dass** im eingebauten Zustand des Ährenhebers im Mähwerk die Stützfläche (19) an einer dem Mähfinger (2) zugewandten Seite des Stützabschnitts (10) angeordnet ist und die Rastausnehmungen (22) auf einer von der Stützfläche (19) abgewandten Seite des Stützabschnitts (10) angeordnet sind.

6. Ährenheber nach einem der Ansprüche 1 bis 5, **dadurch gekennzeichnet, dass** der Sperrhebel (17) eine Verbindungsausnehmung (24) aufweist, wobei die Verbindungsausnehmung dazu vorgesehen ist, einen Verbindungsrandbereich (25) der länglichen Ausnehmung (3) an einem dem Rastabschnitt (15) gegenüberliegenden Ende der länglichen Ausnehmung (3) aufzunehmen.

7. Ährenheber nach Anspruch 6, **dadurch gekennzeichnet, dass** die Verbindungsausnehmung (24) von Stegen (26) begrenzt ist, deren Endabschnitte (27) den Verbindungsrandbereich (25) zwischen sich aufnehmen.

8. Ährenheber nach einem der Ansprüche 1 bis 7, **dadurch gekennzeichnet, dass** der Sperrhebel (17) als Platte ausgeführt ist, wobei zwei Zapfen (4) von mindestens einer Oberfläche der Platte hervorstehen, um den Sperrhebel schwenkbar und verschiebbar in der länglichen Ausnehmung (3) zu halten.

9. Ährenheber nach einem der Ansprüche 1 bis 8, **dadurch gekennzeichnet, dass** der Rastabschnitt (15) im eingebauten Zustand des Ährenhebers im Mähwerk mit einer mit dem Sperrhebel (17) zusammenwirkenden Oberfläche (20) des Mähfingers (2) einen spitzen Winkel (A) einschließt.

10. Ährenheber nach einem der Ansprüche 1 bis 9, **dadurch gekennzeichnet, dass** der Sperrhebel (17) einen Betätigungsabschnitt (12) zur manuellen Betätigung aufweist, wobei an dem Betätigungsabschnitt eine konkave Form (28) zur Aufnahme eines Fingers einer Bedieners ausgebildet ist.

11. Ährenheber nach einem der Ansprüche 1 bis 10, **dadurch gekennzeichnet, dass** der Sperrhebel (17) einen Betätigungshaken (29) zur Betätigung durch den Mähfinger (2) aufweist, wobei der Betätigungshaken dazu ausgebildet ist, im eingebauten Zustand des Ährenhebers im Mähwerk eine Spitze (30) des Mähfingers (2) derart zu umfassen, dass der Sperrhebel bei einem Verändern eines Abstands zwischen dem Mähfinger und der Tragschiene (5) in eine der Positionen verstellt wird.

12. Ährenheber nach einem der Ansprüche 1 bis 11, **dadurch gekennzeichnet, dass** der Sperrhebel (17) bezüglich einer Biegebeanspruchung der Tragschiene (5) in einem Bereich der länglichen Ausnehmung (3) versteifend wirkt, wobei eine versteifende Wirkung des Sperrhebels in einer ersten Biegerichtung (Z) größer ist, als in einer zweiten, der ersten Biegerichtung entgegengesetzten Biegerichtung (-Z).

13. Ährenheber nach einem der Ansprüche 1 bis 12, **dadurch gekennzeichnet, dass** der Sperrhebel (17) durch eine Spannfeder (11) in Richtung des Rastabschnitts (15) vorgespannt ist.

14. Ährenheber nach Anspruch 1, **dadurch gekennzeichnet, dass** die Stützfläche (19) dazu vorgesehen ist, im eingebauten Zustand des Ährenhebers im Mähwerk mit einer der Tragschiene (5) zugewandten Oberfläche (20) des Mähfingers (2) in Kontakt zu sein.

## Claims

1. Ear lifter for a mower of a harvesting machine with finger guards (2) which are attached to a cutter bar, the ear lifter having a support rail (5) with a first end (6) for fastening to the cutter bar, a stalk lifter (8) connected to a second end (7) of the support rail (5) and a locking lever (17),
wherein the locking lever (17) has a support surface (19) for support on one of the finger guards (2) and fixable in at least two positions relative to the support rail (5) in order to set a distance between the finger guard and the support rail,
wherein an elongate recess (3) is provided on the ear lifter and the locking lever (17) is guided displaceably in the elongate recess,
**characterized in that** the locking lever (17) has latching recesses (22), one of the latching recesses in each position interacting with a latching portion (15) on an edge region of the elongate recess (3) in order to fix the locking lever in the respective position.

2. Ear lifter according to claim 1, **characterized in that** the elongated recess (3) is arranged in the support rail (5) or **in that** the elongated recess (3) is arranged in a holder (14) for the finger guard (2) arranged on the support rail (5).

3. Ear lifter according to one of claims 1 or 2, **characterized in that** the locking lever (17) is arranged pivotably in the elongate recess (3), a resulting pivot axis (16) extending transversely to a longitudinal extent of the elongate recess and being displaceable in a direction of the longitudinal extent of the elongate recess.

4. Ear lifter according to claim 3, **characterized in that** the locking lever (17) has a connecting portion (9) and a supporting portion (10) arranged adjacently in the elongate recess, the locking lever being held at the connecting portion pivotably about the pivot axis (16) in the elongate recess (3), and the support surface (19) and the latching recesses (22) being formed on the supporting portion (10).

5. Ear lifter according to claim 4, **characterized in that**, in assembled state of the ear lifter on the mower, the support surface (19) is arranged on a side of the supporting portion (10) facing the finger guard (2) and the latching recesses (22) are arranged on a side of the supporting portion (10) facing away from the support surface (19).

6. Ear lifter according to one of claims 1 to 5, **characterized in that** the locking lever (17) has a connecting recess (24), the connecting recess being provided to receive a connecting edge region (25) of the elongate recess (3) at an end of the elongate recess (3) opposite the latching portion (15).

7. Ear lifter according to claim 6, **characterized in that** the connecting recess (24) is delimited by webs (26), the end portions (27) of which receive the connecting edge region (25) between them.

8. Ear lifter according to one of claims 1 to 7, **characterized in that** the locking lever (17) is designed as a plate, wherein two pins (4) protrude from at least one surface of the plate in order to hold the locking lever pivotably and displaceably in the elongate recess (3).

9. Ear lifter according to one of claims 1 to 8, **characterized in that** the latching portion (15), in assembled state of the ear lifter on the mower, forms an acute angle (A) with a surface (20) of the finger guard (2) cooperating with the locking lever (17).

10. The ear lifter according to any one of claims 1 to 9, **characterized in that** the locking lever (17) has an actuating portion (12) for manual actuation, wherein a concave shape (28) for receiving a finger of an operator is formed on the actuating portion.

11. Ear lifter according to one of claims 1 to 10, **characterized in that** the locking lever (17) has an actuating hook (29) for actuation by the finger guard (2), the actuating hook being designed to embrace, in assembled state of the ear lifter on the mower, a tip (30) of the finger guard (2) in such a way that the locking lever is displaced into one of the positions when a distance between the finger guard and the support rail (5) is changed.

12. Ear lifter according to one of claims 1 to 11, **characterized in that** the locking lever (17) has a stiffening effect with respect to a bending stress on the support rail (5) in a region of the elongate recess (3), a stiffening effect of the locking lever being greater in a first bending direction (Z) than in a second bending direction (-Z) opposite to the first bending direction.

13. Ear lifter according to one of claims 1 to 12, **characterized in that** the locking lever (17) is pretensioned by a spring (11) in the direction of the latching portion (15).

14. Ear lifter according to claim 1, **characterized in that** the support surface (19) is intended, in assembled state of the ear lifter on the mower, to be in contact with a side (20) of the finger guard (2) facing the support rail (5).

## Revendications

1. Releveur d'épis pour une barre de coupe d'une machine de récolte avec des doigts de coupe (2), qui sont placés sur une traverse de coupe, sachant que le releveur d'épis comporte un rail de support (5) avec une première extrémité (6) pour fixer sur la traverse de coupe, un releveur de tiges (8) relié à une deuxième extrémité (7) du rail de support (5) et un levier de blocage (17),
sachant que le levier de blocage (17) comporte une surface de support (19) pour appui sur un des doigts de coupe (2) et peut être placé dans au moins deux positions par rapport au rail de support (5) pour régler un distance entre le doigt de coupe et le rail de support,
sachant qu'un évidement longitudinal (3) est prévu sur le releveur d'épis et le levier de blocage (17) est guidé pouvant se déplacer dans l'évidement longitudinal,
***caractérisé en ce que***
le levier de blocage (17) comporte des évidements d'encliquetage (22), sachant qu'à chaque position un des évidements d'encliquetage coopère avec une section d'encliquetage (15) sur une zone de bordure de l'évidement longitudinal (3) pour placer le levier de blocage dans la position respective.

2. Releveur d'épis selon la revendication 1, ***caractérisé en ce que*** l'évidement longitudinal (3) est disposé dans le rail de support (5) ou **en ce que** l'évidement longitudinal (3) est disposé dans un logement (14) disposé sur le rail de support (5) pour le doigt de coupe (2).

3. Releveur d'épis selon l'une quelconque des revendications 1 ou 2, ***caractérisé en ce que*** le levier de blocage (17) est disposé pouvant pivoter dans l'évidement longitudinal (3), sachant qu'un axe de pivotement (16) en résultant passe transversalement à une extension longitudinale de l'évidement longitudinal et peut être déplacé en direction de l'extension longitudinale de l'évidement longitudinal.

4. Releveur d'épis selon la revendication 3, ***caractérisé en ce que*** le levier de blocage (17) comporte une section de liaison (9) et une section de support (10) disposées l'une près de l'autre dans l'évidement longitudinal, sachant que le levier de blocage est maintenu sur la section de liaison pouvant pivoter autour de l'axe de pivotement (16) dans l'évidement longitudinal (3) et sachant que la surface de support (19) et les évidements d'encliquetage (22) sont constitués sur la section de support (10).

5. Releveur d'épis selon la revendication 4, ***caractérisé en ce qu'***à l'état monté du releveur d'épis dans la barre de coupe, la surface de support (19) est disposée sur un côté tourné vers le doigt de coupe (2) de la section de support (10) et les évidements d'encliquetage (22) sont disposés sur un côté de la section de support (10) éloigné de la surface de support (19).

6. Releveur d'épis selon l'une quelconque des revendications 1 à 5, ***caractérisé en ce que*** le levier de blocage (17) comporte un évidement de liaison (24), sachant que l'évidement de liaison est prévu pour recevoir une zone de bord de liaison (25) de l'évidement longitudinal (3) sur une extrémité de l'évidement longitudinal (3) opposée à la section d'encliquetage (15) .

7. Releveur d'épis selon la revendication 6, ***caractérisé en ce que*** l'évidement de liaison (24) est limité par des taquets (26), dont les sections d'extrémité (27) reçoivent entre elles la zone de bord de liaison (25).

8. Releveur d'épis selon l'une quelconque des revendications 1 à 7, ***caractérisé en ce que*** le levier de blocage (17) est exécuté sous la forme d'une plaque, sachant que deux pivots (4) ressortent d'au moins une surface de la plaque pour maintenir le levier de blocage pouvant pivoter et se déplacer dans l'évidement longitudinal (3).

9. Releveur d'épis selon l'une quelconque des revendications 1 à 8, ***caractérisé en ce que*** la section d'encliquetage (15) forme un angle aigu (A) à l'état monté du releveur d'épis dans la barre de coupe avec une surface (20) du doigt de coupe (2) coopérant avec le levier de blocage (17).

10. Releveur d'épis selon l'une quelconque des revendications 1 à 9, ***caractérisé en ce que*** le levier de blocage (17) comporte une section d'actionnement (12) pour l'actionnement manuel, sachant qu'une forme concave (28) est constituée sur la section d'actionnement pour recevoir un doigt d'un utilisateur.

11. Releveur d'épis selon l'une quelconque des revendications 1 à 10, ***caractérisé en ce que*** le levier de blocage (17) comporte un crochet d'actionnement (29) pour actionnement par le doigt de coupe (2), sachant que le crochet d'actionnement est constitué pour saisir en entourant une pointe (30) du doigt de coupe (2) à l'état monté du releveur d'épis dans la barre de coupe de telle manière que le levier de blocage est réglé dans une des positions lors d'une modification de la distance entre le doigt de coupe et le rail de support (5) .

12. Releveur d'épis selon l'une quelconque des revendications 1 à 11, ***caractérisé en ce que*** le levier de blocage (17) agit de façon rigidifiante eu égard à une sollicitation de flexion du rail de support (5) dans une zone de l'évidement longitudinal (3), sachant qu'un effet rigidifiant du levier de blocage est plus grand dans une première direction de flexion (Z) que dans une deuxième direction de flexion (-Z) opposée à la première direction de flexion.

13. Releveur d'épis selon l'une quelconque des revendications 1 à 12, ***caractérisé en ce que*** le levier de blocage (17) est précontraint par un ressort de tension (11) en direction de la section d'encliquetage (15) .

14. Releveur d'épis selon la revendication 1, ***caractérisé en ce que*** la surface de support (19) est prévue pour être en contact à l'état monté du releveur d'épis dans la barre de coupe avec une surface (20) du doigt de coupe (2) tournée vers le rail de support (5).
